(19) Europäisches Patentamt
European Patent Office
Office européen des brevets

(11) **EP 4 462 644 A1**

(12) **EUROPÄISCHE PATENTANMELDUNG**

(43) Veröffentlichungstag:
**13.11.2024 Patentblatt 2024/46**

(21) Anmeldenummer: **24169144.3**

(22) Anmeldetag: **09.04.2024**

(51) Internationale Patentklassifikation (IPC):
*H02K 1/06* (2006.01)       *H02K 15/02* (2006.01)

(52) Gemeinsame Patentklassifikation (CPC):
**H02K 1/06; H02K 15/02;** H02K 2201/09;
H02K 2213/03

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **19.04.2023 DE 102023203604**

(71) Anmelder: **VOLKSWAGEN AG**
**38440 Wolfsburg (DE)**

(72) Erfinder:
• **Pieper, Sven**
**33178 Borchen (DE)**
• **Bachmann, Tim**
**34308 Bad Emstal (DE)**
• **Prokoph, Stefan**
**34295 Edermünde (DE)**
• **Grützner, Stefan**
**34281 Gudensberg (DE)**

(54) **LAMELLE, LAMELLENPAKET, VERFAHREN ZUR HERSTELLUNG EINES LAMELLENPAKETS, ELEKTRISCHER ANTRIEB SOWIE KRAFTFAHRZEUG**

(57)     Die Erfindung betrifft eine Lamelle (10) für ein Lamellenpaket (12) eines elektrischen Antriebs (14) für ein Kraftfahrzeug (44), aufweisend einen kreisförmigen Grundkörper (16) mit einer zentrisch angeordneten ringförmigen Öffnung (18), einem äußeren Randbereich (20) und einen inneren Randbereich (22), wobei in dem äußeren Randbereich (20) eine Vielzahl von radial verlaufenden Nuten (24) angeordnet sind. Es wird vorgeschlagen, dass mindestens drei Positionierelemente (26) in dem inneren Randbereich (22) und/oder dem äußeren Randbereich (20) vorgesehen sind, wobei die mindestens drei Positionierelemente (26) rotationssymmetrisch, in einem Winkel ($\alpha$) zueinander und mit demselben Abstand (A) zu einem Mittelpunkt (M) des kreisförmigen Grundkörpers (16) um den Mittelpunkt (M) angeordnet sind, wobei von den mindestens drei Positionierelementen (26) zumindest ein Positionierelement eine Ausnehmung (28), zumindest ein Positionierelement ein Verformungsabschnitt (30) und zumindest ein Positionierelement ein Ausgleichselement (32) bildet.

Fig. 1

EP 4 462 644 A1

**Beschreibung**

Die Erfindung betrifft eine Lamelle mit den Merkmalen des unabhängigen Patentanspruchs 1, ein Lamellenpaket mit den Merkmalen des unabhängigen Patentanspruchs 5, ein Verfahren mit den Merkmalen des unabhängigen Patentanspruchs 7, einen elektrischen Antrieb mit den Merkmalen des unabhängigen Patentanspruchs 9 sowie ein Kraftfahrzeug mit den Merkmalen des unabhängigen Patentanspruchs 11.

Elektrische Antriebe beinhalten aus elektromagnetischen Gründen grundsätzlich sowohl im Rotor als auch im Stator Eisenkerne, die aus Blechlamellen aufgestapelt werden. Die individuellen Blechlamellen sind dabei mit einer sehr dünnen Schicht Isolierlack versehen, sodass die elektrische Kontaktierung der Lamellen zueinander möglichst geringgehalten wird. Innerhalb der Produktion müssen diese Blechlamellen bewegt werden, ohne dass die Stapelgenauigkeit beeinträchtigt wird. Das am weitesten verbreitete Verfahren, um die Lamellen gegeneinander zu fixieren, ist das Stanzpaketieren. Dabei wird eine Lamelle in die jeweils darunterliegende durchgesetzt, es entsteht eine dem Durchsetzfügen ähnliche Verbindung. Hierbei wird allerdings als Nebeneffekt die Isolierung der Lamellen zueinander verletzt, sodass erhöhte Verluste, insbesondere Wirbelstromverluste, im Vergleich zu einer nicht stanzpaketierten Maschine auftreten.

Die CN 114 744 836 A zeigt einen derartig hergestellten Motorkern, der durch Stapeln mehrerer Stahlbleche gebildet wird. Dabei weisen ein erstes Stahlblech A und ein zweites Stahlblech B jeweils eine Vielzahl von ringförmig um eine kreisförmige Öffnung verteilte Löcher und Schlitze auf. Dabei entsprechen die Löcher und Schlitze des Stahlblechs A den Löchern und Schlitzen des Stahlblechs B. Diese sind durchgehend durchgesetzt, sodass Verluste auftreten.

Die DE 34 08 563 A1 zeigt ein Blechpaket aus Stanzblechen für Rotoren, Statoren und Magnetkerne. Dabei besteht das Blechpaket aus einer Vielzahl von Stanzblechpaaren, wobei ein Stanzblech einen Verformungsabschnitt und das andere eine den Verformungsabschnitt aufnehmende Öffnung aufweist. Dabei sind diese Stanzblechpaare leicht zueinander verdreht angeordnet, sodass die Verformungsabschnitte miteinander in Kontakt stehen.

Auch in der EP 1 970 918 A2 besteht das Stanzpaket aus einer Vielzahl von Stanzblechpaaren, wobei ein Stanzblech einen Verformungsabschnitt und das andere eine den Verformungsabschnitt aufnehmende Öffnung aufweist. Hier sind die Verformungsabschnitte so ausgebildet, dass diese beim Stapeln in den Verformungsabschnitt des nachfolgenden Stanzblechpaars eingreifen. Auch hier kommt es zu einer Verletzung der Isolierung und damit einhergehend zu hohen Wirbelstromverlusten.

Eine bekannte Möglichkeit ist es, jede Lamelle an möglichst wenig Punkten in die darunterliegende durchzusetzen. Wobei nur die letzte Lamelle des Stapels eine vollständige Ausstanzung aufweist. Allerdings weist dieses Verfahren eine maximale Schädigung der Isolierung auf, woraus eine Kontaktierung der Lamellen zueinander resultiert.

Des Weiteren ist die Lösung bekannt, die Einprägetiefe und Form der Stanzpaketierung hinsichtlich einer möglichst geringen Blechschädigung zu optimieren. Dies stellt aber nur eine geringe Verbesserung des Standardverfahrens dar, die aufgrund der zu erzielenden Befestigungswirkung und der herstellbaren Stempelgeometrie sowie Verschleiß nur eingeschränkt möglich ist.

Eine weitere bekannte Möglichkeit ist es, abwechselnd Lamellen durchzusetzen und sogenannte Leerlamellen vollständig ohne Interlock, sondern mit Löchern an der entsprechenden Position zwischenzustapeln. Hierbei wird eine Lamelle nicht mit der direkt unterhalb liegenden, sondern bspw. mit der übernächsten oder einer noch weiter entfernt liegenden Lamelle verbunden. Allerdings sind abweichende Stanzpaketierungen mit zusätzlichen Leerlamellen aufgrund des längeren Durchsetzungsweges weniger robust herstellbar. Das Material wird im Bereich der Stanzpaketierung weiterhin stärker gedehnt, dies wirkt sich ebenfalls negativ auf die Verluste im Blech, beim Betrieb der elektrischen Maschine und auf die Haltekräfte an jedem Paketierpunkt auf. Weiterhin trägt jede Leerlamelle selbst nicht zur Befestigung bei, sodass die erzielten Abreißkräfte der Lamellen zusätzlich reduziert sind.

Ferner ist es bekannt, innerhalb einer Lamelle eine Abfolge von Durchsatzpunkten, Aufnahmepunkten für das durchgesetzte Material der oberen Lamellen sowie gegebenenfalls durchgehendes Material vorzuhalten und durch Drehen jeder Lamelle zur vorhergehenden Lamelle eine Abfolge von durchgesetzten Lamellen in ein aufnehmendes Loch abzubilden. Es folgt hier in axialer Richtung also immer "Durchsetzen" auf "Aufnehmen". Das Vorhalten der periodischen Abfolge in jeder einzelnen Lamelle weist vor allem einen sehr hohen Platzbedarf auf, sodass sich die effektive Anzahl an Verknüpfungspunkten stark reduziert. Ein elektromagnetischer Vorteil gegenüber einer einfachen Reduzierung der Verknüpfungspunkte in einer der vorgenannten Bauweisen besteht somit nicht. Zusätzlich sind die Haltekräfte an jedem Fixierpunkt durch das tiefere Durchsetzen in den Leerraum an jedem Haltepunkt gegenüber dem Standardverfahren reduziert.

Es ist daher eine Aufgabe der vorliegenden Erfindung, wenigstens einen der voranstehend beschriebenen Nachteile zumindest teilweise zu überwinden. Insbesondere ist es Aufgabe der Erfindung eine Lamelle zur Verfügung zu stellen, die es ermöglicht die Verlustleistung eines elektrischen Antriebs zu reduzieren und gleichzeitig eine erhöhte Haltekraft in einem Lamellenpaket zu erzeugen. Gleichzeitig ist es eine Aufgabe der vorliegenden Erfindung ein Lamellenpaket, einen elektrischen Antrieb und ein Kraftfahrzeug zur Verfügung zu stellen.

Die voranstehende Aufgabe wird gelöst durch eine Lamelle mit den Merkmalen des unabhängigen Patentanspruchs 1, durch ein Lamellenpaket mit den Merkmalen des unabhängigen Patentanspruchs 5, durch ein Verfahren mit den Merkmalen des unabhängigen Patentanspruchs 7, durch einen elektrischen Antrieb mit den Merkmalen des unabhängigen Patentanspruchs 9 sowie durch ein Kraftfahrzeug mit den Merkmalen des unabhängigen Patentanspruchs 11. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Lamelle beschrieben sind, selbstverständlich auch im Zusammenhang mit der erfindungsgemäßen Lamellenpaket und/oder im Zusammenhang mit dem erfindungsgemäßen Verfahren und/oder im Zusammenhang mit dem erfindungsgemäßen elektrischen Antrieb und/oder im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird bzw. werden kann.

In einem ersten Aspekt der Erfindung ist eine Lamelle für ein Lamellenpaket eines elektrischen Antriebs für ein Kraftfahrzeug, aufweisend einen kreisförmigen Grundkörper mit einer zentrisch angeordneten ringförmigen Öffnung, einen äußeren Randbereich und einen inneren Randbereich, wobei in dem äußeren Randbereich eine Vielzahl von radial verlaufenden Nuten angeordnet sind, vorgesehen. Dabei sind mindestens drei Positionierelemente in dem inneren Randbereich und/oder dem äußeren Randbereich vorgesehen, wobei die mindestens drei Positionierelemente rotationssymmetrisch, in einem Winkel zueinander und mit demselben Abstand zu einem Mittelpunkt des kreisförmigen Grundkörpers um den Mittelpunkt angeordnet sind, wobei von den mindestens drei Positionierelementen zumindest ein Positionierelement eine Ausnehmung, zumindest ein Positionierelement ein Verformungsabschnitt und zumindest ein Positionierelement ein Ausgleichselement bildet.

Dabei wird vorliegend unter einer Ausnehmung verstanden, dass diese als eine durchgehende Öffnung ausgebildet ist. Der Verformungsabschnitt ist ein verformter Bereich, der durchsetzt ist, also nicht vollständig durchgestanzt ist. Dieser ist so geformt, dass er bei nacheinander angeordneten Lamellen in eine Ausnehmung oder einen Verformungsabschnitt der vorhergehenden Lamelle eingreift. Das Ausgleichselement dient vor allem bei dem Stapeln der einzelnen Lamellen zu dem Lamellenpaket als ein Höhenausgleich in dem Lamellenpaketstapel. Das Ausgleichselement ist dabei als eine Art Ebene an der Oberfläche der Lamelle ausgebildet und kann auch in diese integriert sein.

Eine derartige Lamelle ermöglicht es auf einfache Art und Weise, bei einem Zusammenbau zu einem Lamellenpaket aufgrund der Zusammensteckbarkeit die Haltekraft zu erhöhen. Aufgrund des Ausgleichselements der Lamelle, kann im Lamellenstapel eine Unterbrechung der Kontaktierung erzeugt werden, dadurch reduziert sich die Verlustleistung des elektrischen Antriebs in welchem die Lamelle zum Einsatz kommt.

Im Rahmen der Erfindung kann es von Vorteil sein, dass der Winkel sich wie folgt berechnet:

$$\alpha = \frac{360°}{Anzahl\ der\ Positionierelemente}.$$

Dieser Winkel gilt zur Positionierung aller Positionierelemente zueinander. Sind alle Positionierelemente mit dem gleichen Winkel angeordnet, so lässt sich später das Lamellenpaket einfacher zusammensetzen.

Im Rahmen der Erfindung ist es denkbar, dass die Ausnehmung und der Verformungsabschnitt der mindestens drei Positionierelemente die gleiche Kontur aufweisen, wobei die Kontur eine kreisförmige oder eine ovale oder eine schlitzförmige Form aufweist.

Da aus der Lamelle bzw. mehrerer Lamellen später ein Lamellenpaket geformt wird, ist es besonders vorteilhaft, wenn der Verformungsabschnitt und die Ausnehmung gleich ausgestaltet sind, da dann der Verformungsabschnitt einer Lamelle in die Ausnehmung einer darauffolgenden Lamelle eingreifen kann, um so eine formschlüssige Verbindung bilden zu können. Dies erhöht die Haltekraft der einzelnen Lamellen in dem Lamellenpaket. Gleichzeitig verringert es den Raumbedarf des später zu formenden Lamellenpakets.

Die Anzahl der Positionierelemente der Lamelle kann je nach Anforderungen an die Lamelle bzw. das Lamellenpakt variieren. Dabei ist es denkbar, dass vier bis zwölf, vorzugsweise fünf bis acht, Positionierelemente pro Lamelle vorgesehen sind. Allerdings ist dabei darauf zu achten, dass mindestens eine Ausnehmung und mindestens ein Ausgleichselement vorgesehen sind.

Bevorzugt kann es im Rahmen der Erfindung vorgesehen sein, dass sechs Positionierelemente vorgesehen sind, wobei die sechs Positionierelemente in einem Winkel von 60° zueinander angeordnet sind, wobei im Uhrzeigersinn

1) drei Verformungsabschnitte, ein Ausgleichselement und zwei Ausnehmungen, oder
2) drei Verformungsabschnitte, zwei Ausgleichselemente und eine Ausnehmung, oder
3) vier Verformungsabschnitte, ein Ausgleichselement und eine Ausnehmung benachbart zueinander angeordnet sind.

Dies ermöglicht eine optimierte Haltekraft und ausreichend Unterbrechungen der Kontaktierung in einem Lamellenpaket, um die Verlustleistung zu reduzieren, und sorgt gleichzeitig für einen verringerten Raumbedarf.

Ein zweiter Aspekt der Erfindung ist ein Lamellenpaket für einen elektrischen Antrieb für ein Kraftfahrzeug mit einer Vielzahl von oben beschriebenen Lamellen, wobei die Anzahl der Lamellen des Lamellenpakets der Anzahl der Positionierelemente entspricht, wobei eine Lamelle auf eine jeweils vorhergehende Lamelle jeweils um den Winkel rotiert nacheinander angeordnet ist.

In einem derartigen Lamellenpaket wird in axialer Richtung periodisch eine Unterbrechung der Kontaktierung durch die Paketierung der Lamellen erreicht. Dies wiederum reduziert die Verlustleistung im Blech einer so gebauten Elektro-Maschine. Im Querschnitt eines Lamellenpakets im Bereich der Positionierelemente betrachtet, greift aufgrund der jeweiligen Rotation der aufeinanderfolgenden Lamellen der Verformungsabschnitt einer Lamelle in einen Verformungsabschnitt in die Ausnehmung der jeweils vorhergehenden Lamelle ein. Die Lamelle nach der Lamelle mit der Ausnehmung, weist dann das Ausgleichselement auf, wodurch die Unterbrechung der Kontaktierung erzeugt wird.

Weist ein Lamellenpaket beispielsweise sechs Lamellen und damit einhergehend sechs Positionierelemente auf, wobei vier Verformungsabschnitte, ein Ausgleichselement und eine Ausnehmung benachbart zueinander angeordnet sind, so weist der Lamellenstapel im betrachteten Querschnitt drei ineinandergreifende Verformungsabschnitte, ein Verformungsabschnitt, welcher in die Ausnehmung greift und anschließend ein als Ebene in der Lamelle ausgebildetes Ausgleichselement auf. Dabei stehen der durch die Ausnehmung greifende Verformungsabschnitt und das Ausgleichselement nicht in Kontakt miteinander.

Auch ist es denkbar, dass alle Lamellen des Lamellenpakets eine identische Anordnung der Nuten und der mindestens drei Positionierelemente aufweisen.

Dies erleichtert die Positionierung der einzelnen Lamellen bei dem Herstellen des Lamellenpakets.

Ein dritter Aspekt der Erfindung ist ein erfindungsgemäßes Verfahren zur Herstellung eines oben beschriebenen Lamellenpakets für ein Kraftfahrzeug mit einer Vielzahl von Lamellen, wie sie oben beschrieben sind, aufweisend die folgenden Schritte:

- Zuführen eines Metallblechs in eine Stanzeinheit,
- erstes Ausstanzen des kreisförmigen Grundkörpers mittels der Stanzeinheit,
- zweites Ausstanzen der Ausnehmung der mindestens drei Positionierelemente mittels der Stanzeinheit,
- Durchsetzen des Verformungsabschnitts mittels der Stanzeinheit,
- Aufeinanderstapeln der ausgestanzten und durchsetzten Lamellen zu dem Lamellenpaket mittels einer Stapeleinheit, wobei die jeweils nachfolgende Lamelle um den Winkel rotiert auf die vorhergehende Lamelle gestapelt wird.

Das Verfahren wird kontinuierlich durchgeführt, das heißt, das Blech wird der Stanzeinheit mit einer kontinuierlichen Geschwindigkeit zugeführt. Demnach können die Lamellen kontinuierlich ausgestanzt werden, um so zeiteffizient Lamellenpakete herstellen zu können.

Im Rahmen der Erfindung ist es optional möglich, dass das erste Ausstanzen und das zweite Ausstanzen und das Durchsetzen in einem Schritt ausgeführt werden.

Dies ermöglicht das Reduzieren der Kosten und der Fertigungszeit, da nun lediglich ein Stanzwerkzeug in der Stanzeinheit vorgesehen sein muss.

Ein vierter Aspekt der Erfindung ist ein erfindungsgemäßer elektrischer Antrieb für ein Kraftfahrzeug mit einem Rotor und einem Stator, wobei der Rotor und/oder der Stator zumindest ein Lamellenpaket aufweisen, welches wie oben beschrieben ausgebildet und/oder hergestellt ist.

Dieser elektrische Antrieb weist eine reduzierte Verlustleistung auf, da aufgrund der Lamellenanordnung in dem Lamellenpaket die Kontaktierung unterbrochen wird.

Ferner kann es im Rahmen der Erfindung vorgesehen sein, dass der Rotor und/oder der Stator mindestens ein erstes Lamellenpaket und ein zweites Lamellenpaket aufweisen, wobei sich das erste und das zweite Lamellenpaket in der Anzahl der Lamellen und/oder Anordnung der Positionierelemente der Lamellen unterscheiden.

Dies erhöht die Variabilität bei der Fertigung des elektrischen Antriebs bzw. des aus den Lamellenpaketen bestehenden Eisenkerns. Demnach kann die Größe des Eisenkerns mittels verschiedener Lamellenpakete angepasst werden.

Ein fünfter Aspekt der Erfindung ist ein erfindungsgemäßes Kraftfahrzeug mit einem oben beschriebenen elektrischen Antrieb.

Vorteile, die ausführlich zu der Lamelle für ein Lamellenpaket eines elektrischen Antriebs für ein Kraftfahrzeug gemäß dem ersten Aspekt der Erfindung beschrieben werden sind, gelten gleichermaßen bei einem Lamellenpaket für einen elektrischen Antrieb für ein Kraftfahrzeug gemäß dem zweiten Aspekt der Erfindung, bei einem Verfahren zur Herstellung eines Lamellenpakets für ein Kraftfahrzeug gemäß dem dritten Aspekt der Erfindung, bei einem elektrischen Antrieb für ein Kraftfahrzeug gemäß dem vierten Aspekt der Erfindung sowie bei einem Kraftfahrzeug mit einem elektrischen Antrieb gemäß dem fünften Aspekt der Erfindung.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei ist die Erfindung in den folgenden Figuren gezeigt:

Figur 1 eine schematische Darstellung einer ersten Lamelle,

Figur 2 eine schematische Darstellung einer zweiten Lamelle,

Figur 3 eine schematische Darstellung einer dritten Lamelle,

Figur 4 eine schematische Darstellung eines Lamellenpakets,

Figur 5 eine schematische Darstellung eines Verfahrens zur Herstellung des Lamellenpakets,

Figur 6 eine schematische Darstellung eines Kraftfahrzeugs mit einem elektrischen Antrieb.

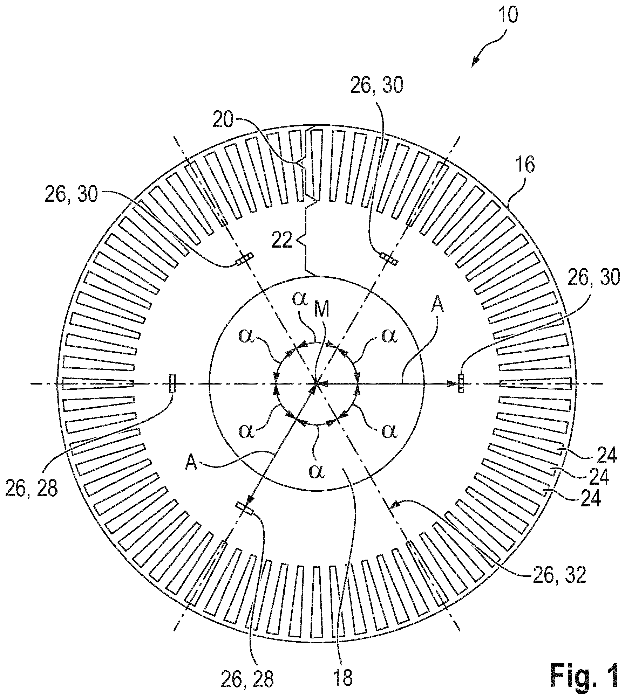

In Fig. 1 bis Fig. 3 ist eine Lamelle 10 für ein Lamellenpaket 12 eines elektrischen Antriebs 14 für ein Kraftfahrzeug 44 dargestellt. Die Lamelle 10 weist einen kreisförmigen Grundkörper 16 mit einer zentrisch angeordneten ringförmigen Öffnung 18, einem äußeren Randbereich 20 und einem inneren Randbereich 22, wobei in dem äußeren Randbereich 20 eine Vielzahl von radial verlaufenden Nuten 24 angeordnet sind, auf.

Dabei sind mindestens drei Positionierelemente 26 in dem inneren Randbereich 22 vorgesehen, wobei die mindestens drei Positionierelemente 26 rotationssymmetrisch, in einem Winkel α zueinander und mit demselben Abstand A zu einem Mittelpunkt M des kreisförmigen Grundkörpers 16 um den Mittelpunkt M angeordnet sind. Von den mindestens drei Positionierelementen 26 bildet zumindest ein Positionierelement 26 eine Ausnehmung 28, zumindest ein Positionierelement 26 ein Verformungsabschnitt 30 und zumindest ein Positionierelement 26 ein Ausgleichselement 32.

Der Winkel α, in dem die Positionierelemente 26 angeordnet sind, berechnet sich wie folgt:

$$\alpha = \frac{360°}{Anzahl\ der\ Positionierelemente}$$

Die Ausnehmung 28 und der Verformungsabschnitt 30 der mindestens drei Positionierelemente 26, wie sie in der Fig. 1 bis Fig. 3 dargestellt sind, weisen die gleiche Kontur auf. In den vorliegenden Ausführungsbeispielen ist die Kontur schlitzförmig. Allerdings können die Ausnehmungen 28 und die Verformungsabschnitte 30 der Lamellen 10 auch eine kreisförmige oder ovale Kontur aufweisen. Dabei sollten die Ausnehmung 28 und der Verformungsabschnitt 30 einer jeweiligen Lamelle 10 eines Lamellenpakets 12 die gleiche Kontur aufweisen, um bei dem Herstellen des Lamellenpakets 12 ineinandergreifen zu können.

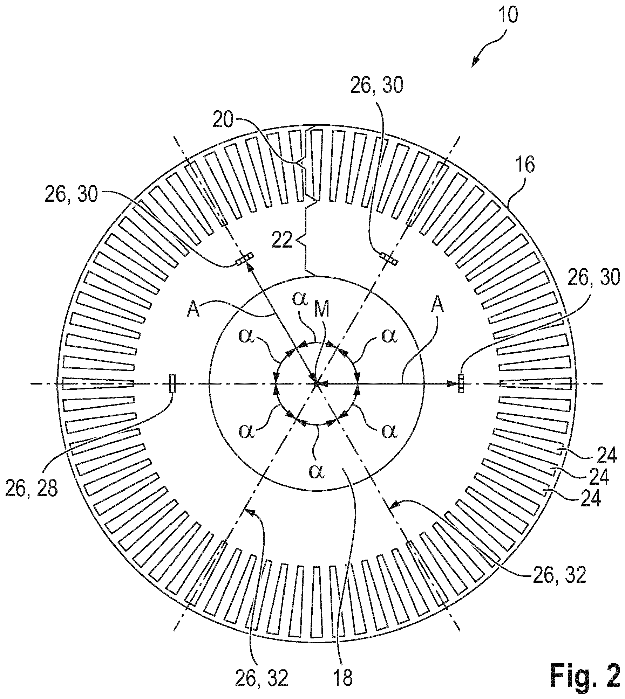

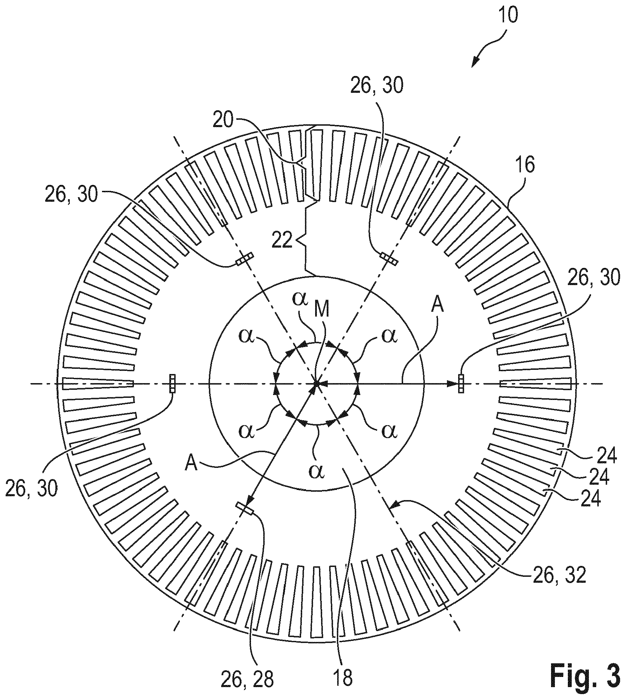

Im Speziellen sind bei dem vorliegenden Ausführungsbeispiel der Fig. 1 bis Fig. 3 sechs Positionierelemente 26 vorgesehen, wobei die sechs Positionierelemente 26 in einem Winkel α von 60° zueinander angeordnet sind. Dabei sind im Uhrzeigersinn in Fig. 1 drei Verformungsabschnitte 30, ein Ausgleichselement 32 und zwei Ausnehmungen 28 benachbart zueinander angeordnet. In Fig. 2 sind drei Verformungsabschnitte 30, zwei Ausgleichselemente 32 und eine Ausnehmung 28 und in Fig. 3 sind vier Verformungsabschnitte 30, ein Ausgleichselemente 32 und eine Ausnehmung 28 benachbart zueinander angeordnet.

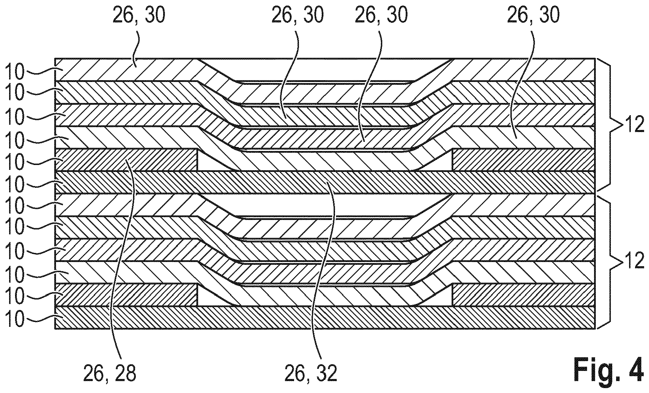

In Fig. 4 ist ein Lamellenpaket 12 für einen elektrischen Antrieb 14 für ein Kraftfahrzeug 44, mit einer Vielzahl von Lamellen 10 gemäß einem der Fig. 1 bis Fig. 3 dargestellt, wobei die Anzahl der Lamellen 10 des Lamellenpakets 12 der Anzahl der Positionierelemente 26 entspricht. Dabei ist eine Lamelle 10 auf eine jeweils vorhergehende Lamelle 10 jeweils um den Winkel α rotiert nacheinander angeordnet.

Dabei weisen alle Lamellen 10 des Lamellenpakets 12 eine identische Anordnung der Nuten 24 und der mindestens drei Positionierelemente 26 auf. Demnach weist das Lamellenpaket 12 entweder Lamellen 10 gemäß Fig. 1 oder Fig. 2 oder Fig. 3 auf.

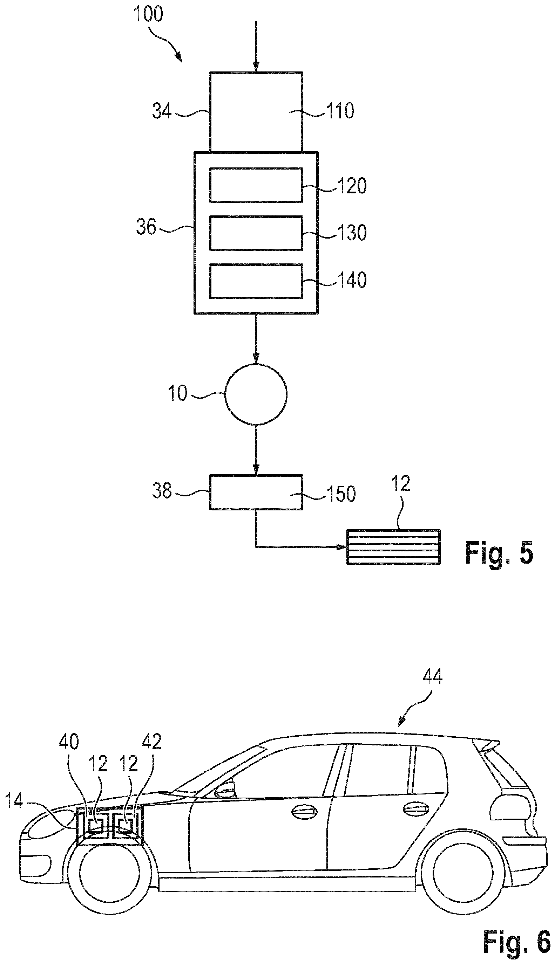

In Fig. 5 ist ein Verfahren 100 zur Herstellung eines Lamellenpakets 12 für ein Kraftfahrzeug 44 gemäß Fig. 4 mit einer Vielzahl von Lamellen 10 gemäß einer der Fig. 1 bis Fig. 3 dargestellt. Das Verfahren 100 weist die folgenden Schritte auf:

- Zuführen 110 eines Metallblechs 34 in eine Stanzeinheit 36,
- erstes Ausstanzen 120 des kreisförmigen Grundkörpers 16 mittels der Stanzeinheit 36,
- zweites Ausstanzen 130 der Ausnehmung 28 der mindestens drei Positionierelemente 26 mittels der Stanzeinheit 36,
- Durchsetzen 140 des Verformungsabschnitts 30 mittels der Stanzeinheit 36,
- Aufeinanderstapeln 150 der ausgestanzten und durchsetzten Lamellen 10 zu dem Lamellenpaket 12 mittels einer Stapeleinheit 38, wobei die jeweils nachfolgende Lamelle 10 um den Winkel α rotiert auf die vorhergehende Lamelle 10 gestapelt wird.

Dabei wird das erste Ausstanzen 120 und das zweite Ausstanzen 130 und das Durchsetzen in einem Schritt ausgeführt.

In Fig. 6 ist ein Kraftfahrzeug 44 mit einem elektrischen Antrieb 14 dargestellt. Der elektrische Antrieb 14 weist einen Rotor 40 und einen Stator 42 auf, wobei der Rotor 40 und der Stator 42 jeweils zumindest ein Lamellenpaket 12 gemäß der Fig. 4 aufweisen.

Dabei weist der Rotor 40 und/oder der Stator 42 mindestens ein erstes Lamellenpaket 12 und ein zweites Lamellenpaket 12 auf. Dabei unterscheiden sich das erste und das zweite Lamellenpaket 12 in der Anzahl der Lamellen 10 und/oder Anordnung der Positionierelemente 26 der Lamellen 10. Denkbar wäre hier auch ein drittes oder n-tes Lamellenpaket 12, deren Lamellen 10 sich von denen der anderen Lamellenpakete 12 unterscheiden.

**Bezugszeichenliste**

10 Lamelle
12 Lamellenpaket
14 elektrischer Antrieb
16 Grundkörper
18 Öffnung
20 äußerer Randbereich
22 innerer Randbereich
24 Nuten
26 Positionierelement
28 Ausnehmung
30 Verformungsabschnitt
32 Ausgleichselement
34 Metallblech
36 Stanzeinheit
38 Stapeleinheit
40 Rotor
42 Stator
44 Kraftfahrzeug

100 Verfahren
110 Zuführen
120 erstes Ausstanzen
130 zweites Ausstanzen
140 Durchsetzen
150 Aufeinanderstapeln

$\alpha$ Winkel
A Abstand
M Mittelpunkt

**Patentansprüche**

1. Lamelle (10) für ein Lamellenpaket (12) eines elektrischen Antriebs (14) für ein Kraftfahrzeug (44),

   aufweisend einen kreisförmigen Grundkörper (16)
   mit einer zentrisch angeordneten ringförmigen Öffnung (18), einem äußeren Randbereich (20) und einen inneren Randbereich (22), wobei in dem äußeren Randbereich (20) eine Vielzahl von radial verlaufenden Nuten (24) angeordnet sind, **dadurch gekennzeichnet,**
   **dass** mindestens drei Positionierelemente (26) in dem inneren Randbereich (22) und/oder dem äußeren Randbereich (20) vorgesehen sind, wobei die mindestens drei Positionierelemente (26) rotationssymmetrisch, in einem Winkel ($\alpha$) zueinander und mit demselben Abstand (A) zu einem Mittelpunkt (M) des kreisförmigen Grundkörpers (16) um den Mittelpunkt (M) angeordnet sind, wobei von den mindestens drei Positionierelementen (26) zumindest ein Positionierelement (26) eine Ausnehmung (28), zumindest ein Positionierelement (26) ein Verformungsabschnitt (30) und zumindest ein Positionierelement (26) ein Ausgleichselement (32) bildet.

2. Lamelle (10) nach Anspruch 1,
   **dadurch gekennzeichnet,**
   **dass** der Winkel ($\alpha$) sich wie folgt berechnet:

$$\alpha = \frac{360°}{\textit{Anzahl der Positionierelemente}}.$$

3. Lamelle (10) nach Anspruch 1 oder 2,
   **dadurch gekennzeichnet,**
   **dass** die Ausnehmung (28) und der Verformungsabschnitt (30) der mindestens drei Positionierelemente (26) die gleiche Kontur aufweisen, wobei die Kontur eine kreisförmige oder eine ovale oder eine schlitzförmige Form aufweist.

4. Lamelle (10) nach einem der vorhergehenden Ansprüche,
   **dadurch gekennzeichnet,**
   **dass** sechs Positionierelemente (26 vorgesehen sind, wobei die sechs Positionierelemente (26) in einem Winkel ($\alpha$) von 60° zueinander angeordnet sind, wobei im Uhrzeigersinn

   1) drei Verformungsabschnitte (30), ein Ausgleichselement (32) und zwei Ausnehmungen (28) oder
   2) drei Verformungsabschnitte (30), zwei Ausgleichselemente (32) und eine Ausnehmung (28) oder
   3) vier Verformungsabschnitte (30), ein Ausgleichselement (32) und eine Ausnehmung (28)

   benachbart zueinander angeordnet sind.

5. Lamellenpaket (12) für einen elektrischen Antrieb (14) für ein Kraftfahrzeug (44), mit einer Vielzahl von Lamellen (10) gemäß einem der vorhergehenden Ansprüche, wobei die Anzahl der Lamellen (10) des Lamellenpakets (12) der Anzahl der Positionierelemente (26) entspricht, wobei eine Lamelle (10) auf eine jeweils vorhergehende Lamelle (10) jeweils um den Winkel ($\alpha$) rotiert nacheinander angeordnet ist.

6. Lamellenpaket (12) nach Anspruch 5,
   **dadurch gekennzeichnet,**
   **dass** alle Lamellen (10) des Lamellenpakets (12) eine identische Anordnung der Nuten (24) und der mindestens drei Positionierelemente (26) aufweisen.

7. Verfahren (100) zur Herstellung eines Lamellenpakets (12) für ein Kraftfahrzeug (44) gemäß einem der Ansprüche 5 oder 6 mit einer Vielzahl von Lamellen (10) gemäß einem der Ansprüche 1 bis 4, aufweisend die folgenden Schritte:

- Zuführen (110) eines Metallblechs (34) in eine Stanzeinheit (36),
- erstes Ausstanzen (120) des kreisförmigen Grundkörpers (16) mittels der Stanzeinheit (36),
- zweites Ausstanzen (130) der Ausnehmung (28) der mindestens drei Positionierelemente (26) mittels der Stanzeinheit (36),
- Durchsetzen (140) des Verformungsabschnitts (30) mittels der Stanzeinheit (36),
- Aufeinanderstapeln (150) der ausgestanzten und durchsetzten Lamellen (10 zu dem Lamellenpaket (12) mittels einer Stapeleinheit (38), wobei die jeweils nachfolgende Lamelle (10) um den Winkel ($\alpha$) rotiert auf die vorhergehende Lamelle (10) gestapelt wir.

8. Verfahren (100) nach Anspruch 7,
**dadurch gekennzeichnet,**
**dass** das erste Ausstanzen (120) und das zweite Ausstanzen (130) und das Durchsetzen (140) in einem Schritt ausgeführt werden.

9. Elektrischer Antrieb (14) für ein Kraftfahrzeug (44), mit einem Rotor (40) und einem Stator (42), wobei der Rotor (40) und/oder der Stator (42) zumindest ein Lamellenpaket (12) gemäß einem der Ansprüche 5 oder 6 aufweisen.

10. Elektrischer Antrieb (14) nach Anspruch 9,
**dadurch gekennzeichnet,**
**dass** der Rotor (40) und/oder der Stator (42) mindestens ein erstes Lamellenpaket (12) und ein zweites Lamellenpaket (12) aufweisen, wobei sich das erste und das zweite Lamellenpaket (12) in der Anzahl der Lamellen (10) und/oder Anordnung der Positionierelemente (26) der Lamellen (10) unterscheiden.

11. Kraftfahrzeug (44) mit einem elektrischen Antrieb (14) gemäß Anspruch 9 oder 10.

Fig. 1

Fig. 2

Fig. 3

Fig. 4

Fig. 5

Fig. 6

**Europäisches Patentamt**
**European Patent Office**
**Office européen des brevets**

# EUROPÄISCHER RECHERCHENBERICHT

**Nummer der Anmeldung**

EP 24 16 9144

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 847 109 A2 (CORRADA SPA [IT]) 10. Juni 1998 (1998-06-10) * Spalte 1, Zeilen 1-5 Spalte 36, Zeilen 36-49; Abbildungen 2, 4, 5A-C * | 1-11 | INV. H02K1/06 H02K15/02 |
| | ----- | | |
| X | JP S63 213433 A (MITSUBISHI ELECTRIC CORP) 6. September 1988 (1988-09-06) * Abbildung 2 * | 1 | |
| | ----- | | |
| A | EP 1 391 975 B1 (MITSUI HIGH TEC [JP]) 14. Oktober 2009 (2009-10-14) * Abbildung 6 * | 1-11 | |
| | ----- | | |

**RECHERCHIERTE SACHGEBIETE (IPC)**

H02K

Der vorliegende Recherchenbericht wurde für alle Patentansprüche erstellt

| Recherchenort | Abschlußdatum der Recherche | Prüfer |
|---|---|---|
| Den Haag | 26. September 2024 | Jabri, Tarak |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 9144

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-09-2024

| Im Recherchenbericht angeführtes Patentdokument | | Datum der Veröffentlichung | Mitglied(er) der Patentfamilie | | Datum der Veröffentlichung |
|---|---|---|---|---|---|
| EP 0847109 | A2 | 10-06-1998 | BR | 9706128 A | 18-05-1999 |
| | | | EP | 0847109 A2 | 10-06-1998 |
| | | | IT | 1286450 B1 | 08-07-1998 |
| | | | US | 5923112 A | 13-07-1999 |
| | | | US | 6009607 A | 04-01-2000 |
| JP S63213433 | A | 06-09-1988 | KEINE | | |
| EP 1391975 | B1 | 14-10-2009 | EP | 1391975 A1 | 25-02-2004 |
| | | | JP | 4018885 B2 | 05-12-2007 |
| | | | JP | 2002354717 A | 06-12-2002 |
| | | | US | 2004056556 A1 | 25-03-2004 |
| | | | WO | 02097948 A1 | 05-12-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 114744836 A
- DE 3408563 A1

- EP 1970918 A2